# EUROPÄISCHE PATENTSCHRIFT

(11) **EP 0 658 716 B1**
(45) Veröffentlichungstag und Bekanntmachung des Hinweises auf die Patenterteilung: **04.03.1998**
(21) Anmeldenummer: 94116451.9
(22) Anmeldetag: 19.10.1994
(51) Int. Cl.: F16L 59/06

(54) **Kühl- und/oder Gefriergerät mit einem Wärmeisolationsformkörper**
Refrigerator and/or freezer with a thermal insulating element
Réfrigérateur et/ou congélateur avec un élément d'isolation thermique

(30) Priorität: 16.12.1993 DE 4342948
(43) Veröffentlichungstag der Anmeldung: 21.06.1995
(73) Patentinhaber: AEG Hausgeräte GmbH, 90429 Nürnberg (DE)
(72) Erfinder: Jürgensen, Heinz, Dr.-Ing., D-34253 Lohfelden (DE); Krug, Günter, Dipl.-Ing., D-34302 Guxhagen (DE)

(56) Entgegenhaltungen:
- DE-C- 816 592
- DE-C- 4 016 048
- US-A- 4 646 934

## Beschreibung

Die Erfindung betrifft ein Kühl- und/oder Gefriergerät mit einem Vakuumisolationsformkörper.

Ein bekannter Wärmeisolationsformkörper dieser Art (DE 92 04 365 U1) ist als Wandelement für Kühl- oder Gefrierschränke bzw. -Truhen vorgesehen und besteht aus parallel zueinander liegenden Wandflächen, zwischen welchen sich eine Füllung aus Kieselsäurepulver als Stützmittel befindet. Dabei ist der Randbereich der beiden zusammengehörigen Wandflächen durch umgebogene Randabschnitte verschlossen, wobei der durch das Stützmittel umschlossene Hohlraum zwischen den Wandflächen weitgehend evakuiert ist. Die Ränder der Wandflächen können dabei unmittelbar oder über einen zwischengefügten Profilstreifen vakuumdicht verbunden und abgestützt sein. Der Profilstreifen weist dabei U-förmige Nuten auf, in welche die Ränder der Wandflächen vakuumdicht eingreifen. Wärmeisolationselemente dieser Art können als Tür oder Deckel für Kühl- oder Gefriergeräte ausgebildet sein. Von Nachteil ist bei diesen Ausgestaltungen, daß über die unmittelbar miteinander verbundenen Ränder der Wandflächen im Randbereich eine relativ hohe Wärmeleitung zwischen der kühlen Innenwand und der dem gegenüber warmen Außenwand auftritt. Bei einem Abschluß der Wandflächen mittels eines Kunststoffprofilstreifens treten erfahrungsgemäß Schwierigkeiten bei der vakuumdichten Verbindung zwischen diesen Teilen auf.

Ein Wärmeisolationselement mit einer Membran als Abschlußmittel am Randbereich ist aus der DE-C-40 16 048 bekannt. Die hier offenbarten Vakuumisolationsformkörper sind als Rohrleitungen und Behälter für kryogen Fluide offenbart und müssen sich nicht im täglichen Einsatz gegen Stoß, Entnahme und Zugabe von Kühlgut usw. bewähren.

Der Erfindung liegt die Aufgabe zugrunde, bei einem Kühl- und/oder Gefriergerät Maßnahmen zu treffen, durch welche ein stabiler, dauerhaft vakuumsicherer Abschluß zwischen den Wandflächen bei geringer Wärmeleitung erreicht wird.

Bei einem Aufbau eines Kühl- und/oder Gefriergeräts mit einem Vakuumisolationsformkörper mit Abschlußmitteln zwischen den Wandflächen gemäß der Erfindung bildet die gegenüber wenigstens einem Rand der Wandflächen zurückgesetzte gasundurchlässige Membran einen gasdichten Abschluß mit sehr geringer Wärmeleitung zwischen den Wandflächen, während die Membranabdeckung außerhalb des evakuierten Hohlraumes liegt und die aus sehr dünnem Metallblech bestehende und damit gegen Beschädigungen empfindliche Membran gegen Zugriff schützt. Die Membranabdeckung kann dabei klemm- oder formschlüssig mit den äußeren Rändern der Wandflächen des Wärmeisolationselements verbunden sein. Auch kann der außerhalb der Membran liegende freie Raum zwischen den Rändern mit Isolierschaum ausgeschäumt sein. Bei loser Bereitstellung der Membranabdeckung kann dieselbe aus Schaumkunststoff bestehen. Eine als Formteil ausgebildete Membranabdeckung läßt sich einfach montieren und verhindert bei einer Ausbildung aus einem wärmeisolierenden Werkstoff weitgehend einen Wärmeübergang zwischen den auf unterschiedlichen Temperaturniveaus liegenden Wandflächen des Wärmeisolationselements. Zudem lassen sich mit der Membranabdeckung auch die Stirnkanten der insbesondere aus Edelstahlblech bestehenden Wandflächen abdecken, so daß die Schnittkanten der Wandflächen keine Verletzungsgefahr für den Nutzer des mit solchen Wärmeisolationselementen ausgestatteten Kühlgeräts bilden. Die Membranabdeckung kann dabei zugleich einen magnetischen Gegenpol aufnehmen, der aus einem magnetisierbaren Blechstreifen bestehen kann und in der Membranabdeckung gehalten wird. Eine so ausgebildete Membranabdeckung kann den Öffnungsrand eines Kühlraumes umschließen und dort als magnetisches Gegenlager für eine mit der Tür verbundene Magnetdichtung dienen. Außerdem kann in dem Raum außerhalb der Membran ein Heizelement angeordnet werden, das zur Vermeidung der Betauung im Bereich der Dichtung bzw. des magnetischen Gegenpols dient und auch ein Anfrieren der Dichtung am magnetischen Gegenpol verhindert. Die Halterung und Abdeckung dieses Heizelements übernimmt dabei gleichzeitig die Membranabdeckung. Insgesamt ist somit ein thermisch hochwirksamer Abschluß im Randbereich der Wärmeisolationselemente mit wenig Einzelteilen ausführbar. aus einem magnetisierbaren Blechstreifen bestehen kann und in der Membranabdeckung gehalten wird. Eine so ausgebildete Membranabdeckung kann den Öffnungsrand eines Kühlraumes umschließen und dort als magnetisches Gegenlager für eine mit der Tür verbundene Magnetdichtung dienen. Außerdem kann in dem Raum außerhalb der Membran ein Heizelement angeordnet werden, das zur Vermeidung der Betauung im Bereich der Dichtung bzw. des magnetischen Gegenpols dient und auch ein Anfrieren der Dichtung am magnetischen Gegenpol verhindert. Die Halterung und Abdeckung dieses Heizelements übernimmt dabei gleichzeitig die Membranabdeckung. Insgesamt ist somit ein thermisch hochwirksamer Abschluß im Randbereich der Wärmeisolationselemente mit wenig Einzelteilen ausführbar.

Die Erfindung ist nachfolgend anhand der Skizzen von teilweise dargestellten Wärmeisolationselementen mit im Randbereich vorgesehenen Abschlußmitteln näher erläutert.

Es zeigen:
Fig. 1 ein Wärmeisolationselement mit einem freien Abstand zwischen einer Membran und einer Membranabdeckung im Randbereich der zugehörigen Wandflächen,
Fig. 2 eine Anordnung ähnlich derjenigen nach Fig. 1 mit einem in eine Abschlußleiste integrierten magnetischen Gegenpol,
Fig. 3 ein Wärmeisolationselement mit dicht an eine Membran angesetzter Membranabdeckung,
Fig. 4 ein Wärmeisolationselement gemäß Fig. 3 mit in die Membranabdeckung integriertem Heizelement und magnetischem Gegenpol und
Fig. 5 ein Wärmeisolationselemente gemäß Fig. 4 mit einem Hohlraum zwischen der Membran und der Membranabdeckung für ein Heizelement.

Ein nur im Randbereich und im Querschnitt dargestelltes, insbesondere plattenförmiges Wärmeisolationselement 1 weist zwischen zwei Wandflächen 2 einen mit einem wärmeisolierenden Stützmittel 12, insbesondere Glas- oder Mineralfasern bzw. Kieselsäurepulver gefüllten Hohlraum auf. Für einen vakuumdichten Abschluß zwischen den Wandflächen 2 dient eine gewellte Membran 3, deren Wellenkämme in versetzten Ebenen vorzugsweise parallel zur Ebene der Wandflächen 2 verlaufen und deren Ränder mit den aufeinander zuweisenden Innenseiten 4 der Wandflächen 2 vakuumdicht verbunden, insbesondere verschweißt oder verklebt sind. Die Membran 3 erstreckt sich vorzugsweise über den gesamten Umfang des Wärmeisolationselements 1. Sie besteht wie die Wandflächen 2 insbesondere aus Edelstahlblech, das eine äußerst geringe Gaspermeabilität aufweist. Der mit dem Stützmittel 12 gefüllte Hohlraum wird dabei weitgehend evakuiert, so daß das Wärmeisolationselement 1 eine sehr hohe wärmedämmende Wirkung besitzt. Die Membran 3 ist gegenüber den freien äußeren Randkanten 5 der über die Membran hinauslaufenden Ränder 6 der Wandflächen 2 zurückgesetzt, so daß außerhalb der Membran 3 zwischen den Rändern 6 ein freier Raum verbleibt. Da die Membran 3 aus sehr dünnem Edelstahlblech besteht, das durch äußeren Zugriff leicht deformiert oder beschädigt werden kann, ist zusätzlich eine die Ränder 6 im Bereich der Randkanten 5 verbindende Membranabdeckung 7 vorgesehen. Die Membranabdeckung 7 besteht aus schlecht wärmeleitendem Material, insbesondere aus geschäumtem Kunststoff, der eine wärmeisolierende Wirkung aufweist und wie die aus schlecht wärmeleitenden Material bestehende Membran 3 nur einen vernachlässigbaren Wärmefluß zwischen den auf unterschiedlichen Temperaturniveaus liegenden Wandflächen 2 aufweist. Die Membranabdeckung 7 greift zwischen die Ränder 6 der Wandflächen des jeweiligen Wärmeisolationselements 1 ein und liegt an deren Innenflächen 4 zur Vermeidung eines Luftaustauschs zwischen der Außenatmosphäre und dem der Membran benachbarten Bereich dicht an. Die Membranabdeckung übergreift dabei die Stirnkanten 5 der Wandflächen 2, so daß dieselben gegen freien Zugriff geschützt sind und keine Verletzungsgefahr bei der Handhabung des Wärmeisolationselements 1 darstellen.

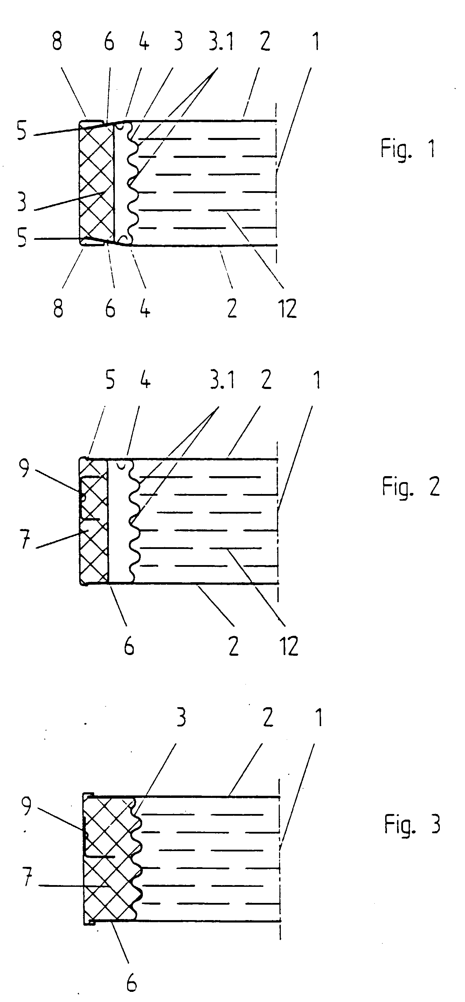

Gemäß Fig. 1 endet die Membranabdeckung zwischen den Rändern 6 mit Abstand von der Membran 3. Die Membran 3 kann sich dadurch im Betrieb frei gegenüber der Membranabdeckung 7 bewegen. Zur Halterung der Membranabdeckung 7 sind die Ränder 6 mit geringer Neigung aufeinander zugerichtet, wobei die Membranabdeckung 7 in ihrer Querschnittsform angepaßt ist und mit Randnasen 8 die Außenflächen der Ränder 6 übergreift. Die Randnasen 8 können dabei in ihren Abmessungen so klein bemessen werden, daß sie die Ebene der jeweils zugehörigen Randfläche 2 nicht überragen jedoch eine sichere mechanische Abstützung gegen äußere Krafteinwirkungen bilden. Durch diesen Formschluß ist eine sichere Halterung der Membranabdeckung 7 gewährleistet.

Bei dem Wärmeisolationselement nach Fig. 2 verlaufen die Randzonen 6 in der Ebene der jeweils zugehörigen Wandfläche 2. Auch hier greift die Membranabdeckung 7 zum einen zwischen die Innenseiten 4 der Randzonen 6 dicht ein und übergreift zugleich die Stirnkanten 5 der Ränder 6. Dabei ist in die Membranabdeckung 7 ein magnetischer Gegenpol 9 eingefügt, der als magnetisches Gegenlager für eine magnetische Türdichtung dient, wenn das Wärmeisolationselement mit seiner Membranabdeckung 7 dem durch eine Tür oder Deckel zu verschließenden Öffnungsrand eines Kühl- oder Gefriergerätes zugeordnet ist. Der vorzugsweise profilierte, z. B. L-, Z- oder U-förmige Gegenpol 9 kann dabei in die Membranabdeckung 7 eingeschäumt oder nachträglich eingesteckt sein.

Bei der Ausführungsform eines Wärmeisolationselements gemäß Fig. 3 reicht die Membranabdeckung 7 zwischen den Rändern 6 bis dicht an die Membran heran und ist in diesem Falle insbesondere dadurch gebildet, daß der Raum zwischen den äußeren Randzonen 6 der Wandflächen 2 in situ ausgeschäumt ist. Dabei kann ein magnetischer Gegenpolstreifen 9 gleichzeitig mit eingeschäumt sein. In diesem Falle ist es auch möglich, zusätzlich ein Heizelement 10 mit einzuschäumen. Ein solches Heizelement 10 kann durch ein Rohr des Kältemittelkreislaufs oder ein elektrisches Heizelement gebildet sein, und dient dazu, im Betrieb ein Betauen des Bereichs nahe dem Gegenpol durch Wärmezufuhr zu verhindern. Die Membranabdeckung kann jedoch auch als eigenständiges Bauteil durch Schäumen hergestellt und klemmschlüssig zwischen die Wandflächen 2 bzw. deren Ränder 6 eingefügt werden, wenn Konstruktionen gemäß den Fig. 2, 3 oder 4 gewählt werden. Die Membranabdeckung kann jedoch auch mit wenigstens einer der Wandflächen 2 verklebt sein.

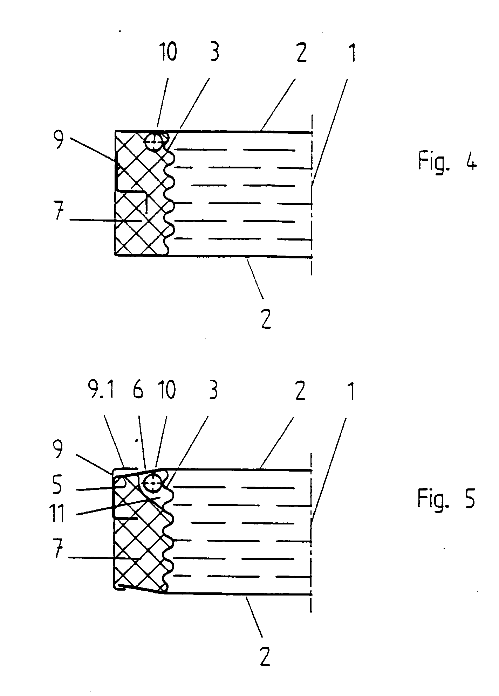

Bei dem Wärmeisolationspanel 1 gemäß Fig. 5 ist die Membranabdeckung 7 wie bei der Ausführungsform nach Fig. 1 durch die nach innen geneigten Ränder 6 gehalten. Dabei ist zwischen der Membran und der Membranabdeckung 7 ein Teilraum 11 freigelassen, welcher das Heizelement 10 lose aufnimmt. Das Heizelement 10 liegt dabei wie bei der Ausführungsform nach Fig. 4 benachbart zu der im Betrieb wärmeren, bei Kühlgeräten außenliegenden Wandfläche 2, wobei der Kanal bei der Ausführungsform nach Fig. 5 so klein bemessen ist, daß das Heizelement 10 in der Nähe dieser außenliegenden Wand 2 gehalten wird. Der übrige Abschnitt der Membranabdeckung 7 liegt dabei wie bei den Fig. 3 und 4 flächenbündig an der Membran 3 an. Dabei ist es möglich, den Gegenpol 9 aus einem U-förmigen Profilstreifen zu bilden, der mit einem Schenkel in die Membranabdeckung 7 eingreift und dessen anderer Schenkel benachbart zum hier nach innen geneigten Rand 6 denselben übergreift. In diesem Falle bildet der magnetische Gegenpol 9 zugleich einen Schutz für den Bereich der benachbarten Stirnkante 5. Gegebenenfalls kann dieser überstehende Schenkel 9.1 auch mit dem benachbarten Rand 6 fest verklebt oder verschweißt werden.

Insgesamt ergibt sich bei einem solchen Aufbau ein wirksamer mechanischer Schutz für die empfindliche Membran 3, wobei die dafür vorgesehene Membranabdeckung 7 in einfacher Weise am Wärmeisolierelement festgesetzt werden kann und letztere zugleich für die Anbringung eines magnetischen Gegenpols und für die Halterung eines Heizelements ausgenutzt werden kann. Die Membran 3 wie die Membranabdeckung 7 können daher unter Berücksichtigung ihrer Funktion aus schlecht wärmeleitenden Materialien hergestellt werden, so daß im Randbereich ein geringer thermischer Verlust auftritt, der eine Betauung im Randbereich insbesondere bei Gefriergeräten weitgehend verhindert und nur im Bedarfsfall eine Zusatzbeheizung erfordert. Es ist zudem eine geringe Teilezahl für die Darstellung eines so ausgebildeten Wärmeisolationspanels erforderlich, da keine Zusatzteile für die Montage des Heizelements und des Gegenpols erforderlich sind. Das Wärmeisolationselement kann aber auch als z. B. fünfwandiges Gehäuse aus einer Innenschale und einer Außenschale bestehen, deren eine Zugrifföffnung in den umschlossenen Raum umgebenden, vakuumdicht mittel der Membran 3 zu verbindenden Ränder umlaufend mit der Membranabdeckung 7 abgeschlossen sind.

## Patentansprüche

1. Kühl- und/oder Gefriergerät mit einem Vakuumisolationsformkörper für Deckel, Tür oder Gehäuse mit parallel zueinander liegenden Wandflächen und dazwischen angeordneten Stützmitteln sowie mit im Randbereich vorgesehenen Abschlußmitteln zwischen den Wandflächen, wobei die Abschlußmittel eine gegenüber wenigstens einer Randkante (5) der Wandflächen (2) zurückgesetzte, die benachbarten Ränder (5) der Wandflächen (2) dicht verbindende vakuumdichte Membran (3) sowie eine die freien äußeren Ränder (6) der Wandflächen (2) überbrückende Membranabdeckung (7)aufweisen und wobei die Membran (3) und die Membranabdeckung (7) aus schlecht wärmeleitenden Materialien bestehen.

2. Kühl- und/oder Gefriergerät nach Anspruch 1, dadurch gekennzeichnet, daß die Membran (3) mit parallel zur Ebene der Wandflächen (2) verlaufenden Wellen (3.1) ausgebildet ist.

3. Kühl- und/oder Gefriergerät nach Anspruch 1 oder 2, dadurch gekennzeichnet, daß die Endränder der Membran (3) zu den freien Rändern (6) der Wandflächen (2) gerichtet und mit letzteren an den einander zugewandten Innenflächen (4) vakuumdicht verbunden sind.

4. Kühl- und/oder Gefriergerät nach Anspruch 1 oder einem der folgenden, dadurch gekennzeichnet, daß die Membranabdeckung (7) die zugehörigen Stirnkanten (5) der Wandflächen (2) übergreift.

5. Kühl- und/oder Gefriergerät nach Anspruch 1 oder einem der folgenden, dadurch gekennzeichnet, daß die Membranabdeckung (7) zwischen die freien Ränder (5) der Wandflächen (2) greift.

6. Kühl- und/oder Gefriergerät nach Anspruch 5, dadurch gekennzeichnet, daß die Membranabdeckung (7) mit Abstand von der Membran (3) endet.

7. Kühl- und/oder Gefriergerät nach Anspruch 5, dadurch gekennzeichnet, daß die Membranabdeckung (7) flächenbündig an der Membran (3) anliegt.

8. Kühl- und/oder Gefriergerät nach Anspruch 1 oder einem der folgenden, dadurch gekennzeichnet, daß die Membranabdeckung (7) aus wärmeisolierendem Material, insbesondere aus geschäumtem Kunststoff, besteht.

9. Kühl- und/oder Gefriergerät nach Anspruch 1 oder einem der folgenden, dadurch gekennzeichnet, daß die Membranabdeckung (7) die zugeordneten Randzonen (6) der Wandflächen (2) an deren Außenseite übergreift.

10. Kühl- und/oder Gefriergerät nach Anspruch 1 oder einem der folgenden, dadurch gekennzeichnet, daß die Membranabdeckung (7) klemmschlüssig an den Wandflächen (2) gehalten ist.

11. Kühl- und/oder Gefriergerät nach Anspruch 1 oder einem der folgenden, dadurch gekennzeichnet, daß die Membranabdeckung (7) wenigstens mit einer Innenwandfläche (4) verklebt ist.

12. Kühl- und/oder Gefriergerät nach Anspruch 1 oder einem der folgenden, dadurch gekennzeichnet, daß die sich gegenüberstehenden freien Randzonen (6) der Wandflächen (2) aufeinander zu geneigt sind und in Anlage mit zwischen diese Randzonen (6) greifenden Halteflächen an der Membranabdeckung (7) stehen.

13. Kühl- und/oder Gefriergerät nach Anspruch 1 oder einem der folgenden, dadurch gekennzeichnet, daß die Membranabdeckung (7) bei einem Kühl- oder Gefriergerät mit einem magnetischen Gegenpol (9) versehen ist, der einer Dichtung an einer demgegenüber verschwenkbaren Gerätetür oder -klappe zugewandt ist.

14. Kühl- und/oder Gefriergerät nach Anspruch 13, dadurch gekennzeichnet, daß der Gegenpol (9) als Profilstreifen ausgebildet und in der Membranabdeckung (7) verankert ist.

15. Kühl- und/oder Gefriergerät nach Anspruch 13 oder 14, dadurch gekennzeichnet, daß ein Schenkel (9.1) des profilierten Gegenpols (9) eine Randzone (5) einer Wandfläche (2) übergreift.

16. Kühl- und/oder Gefriergerät nach Anspruch 1 oder einem der folgenden, dadurch gekennzeichnet, daß im Raum zwischen den äußeren Randzonen (6) der Wandflächen (2) ein Heizelement (10) angeordnet ist.

17. Kühl- und/oder Gefriergerät nach Anspruch 16, dadurch gekennzeichnet, daß das Heizelement (10) in einem Kanal (11) zwischen der Membran (3) und der Membranabdeckung (7) angeordnet ist.

18. Kühl- und/oder Gefriergerät nach Anspruch 16, dadurch gekennzeichnet, daß das Heizelement (10) in die Membranabdeckung (7) eingefügt ist.

19. Kühl- und/oder Gefriergerät nach Anspruch 1 oder einem der folgenden, dadurch gekennzeichnet, daß der Raum zwischen den äußeren Randzonen (6) der Wandflächen (2) in situ ausgeschäumt ist.

## Claims

1. Refrigeration and/or freezing appliance having a vacuum insulating moulded body for the top, door or housing, with mutually parallel wall faces and support means disposed therebetween and having sealing means provided in the edge region between the wall faces, the sealing means having a vacuum-tight membrane (3) which is set back relative to at least one edge (5) of the wall faces (2) and which joins in a sealing-tight manner the adjacent edges (5) of the wall faces (2) and having a membrane covering (7), the membrane bridging the free outer edges (6) of the wall faces. and the membrane (3) and the membrane covering (7) consisting of materials which are poor conductors of heat.

2. Refrigeration or freezing appliance according to claim 1, characterised in that the membrane (3) is formed with corrugations (3.1) extending parallel to the plane of the wall faces (2).

3. Refrigeration or freezing appliance according to claim 1 or 2. characterised in that the end edges of the membrane (3) are oriented towards the free edges (6) of the wall faces (2) and are connected to the same in a vacuum-tight manner at the mutually facing inner faces (4).

4. Refrigeration or freezing appliance according to claim 1 or one of the subsequent claims. characterised in that the membrane covering (7) overlaps the associated front edges (5) of the wall faces (2).

5. Refrigeration or freezing appliance according to claim 1 or one of the subsequent claims, characterised in that the membrane covering (7) engages between the free edges (5) of the wall faces (2).

6. Refrigeration or freezing appliance according to claim 5, characterised in that the membrane covering (7) ends with clearance from the membrane (3).

7. Refrigeration or freezing appliance according to claim 5, characterised in that the membrane covering (7) abuts the membrane (3) in a flush manner.

8. Refrigeration or freezing appliance according to claim 1 or one of the subsequent claims, characterised in that the membrane covering (7) consists of heat-insulating material, in particular plastics foam.

9. Refrigeration or freezing appliance according to claim 1 or one of the subsequent claims, characterised in that the membrane covering (7) overlaps the associated edge regions (6) of the wall faces (2) on their exterior.

10. Refrigeration or freezing appliance according to claim 1 or one of the subsequent claims. characterised in that the membrane covering (7) is held in a clamping manner against the wall faces (2).

11. Refrigeration or freezing appliance according to claim 1 or one of the subsequent claims, characterised in that the membrane covering (7) is adhered at least to one inner wall face (4).

12. Refrigeration or freezing appliance according to claim 1 or one of the subsequent claims, characterised in that the mutually opposing free edge regions (6) of the wall faces (2) are inclined towards one another and are in abutment with holding faces engaging between these edge regions (6) on the membrane covering (7).

13. Refrigeration or freezing appliance according to claim 1 or one of the subsequent claims, characterised in that the membrane covering (7) in a refrigeration or freezing appliance is provided with a magnetic counter-pole (9), which faces a seal on an appliance door or flap pivotable with respect to said counter-pole.

14. Refrigeration or freezing appliance according to claim 13, characterised in that the counter-pole (9) is formed as a profile strip and anchored in the membrane covering (7).

15. Refrigeration or freezing appliance according to claim 13 or 14. characterised in that a shank (9.1) of the profiled counter-pole (9) overlaps an edge region (5) of one wall face (2).

16. Refrigeration or freezing appliance according to claim 1 or one of the subsequent claims. characterised in that in the space between the outer edge regions (6) of the wall faces (2) a heating element (10) is disposed.

17. Refrigeration or freezing appliance according to claim 16, characterised in that the heating element (10) is disposed in a channel (11) between the membrane (3) and the membrane covering (7).

18. Refrigeration or freezing appliance according to claim 16, characterised in that the heating element (10) is inserted into the membrane covering (7).

19. Refrigeration or freezing appliance according to claim 1 or one of the subsequent claims. characterised in that the space between the outer edge regions (6) of the wall faces (2) is filled with foam *in situ.*

## Revendications

1. Appareil de réfrigération et/ou de congélation avec un corps de moulage d'isolation de vide pour un couvercle, une porte ou une enceinte avec des surfaces de paroi parallèles l'une à l'autre et des supports disposés entre celles-ci et avec des moyens de fermeture prévus dans la zone de bord entre les surfaces de paroi, les moyens de fermeture présentant une membrane (3) étanche au vide décalée en arrière par rapport à au moins une arête de bord (5) des surfaces de paroi (2), reliant d'une manière étanche les bords avoisinants (5) des surfaces de paroi (2) ainsi qu'un recouvrement de membrane (7) passant sur les bords extérieurs libres (6) des surfaces de paroi (2), la membrane (3) et le recouvrement de membrane (7) étant réalisés en des matériaux d'une mauvaise conductibilité thermique.

2. Appareil de réfrigération et/ou de congélation selon la revendication 1, caractérisé en ce que la membrane (3) est réalisée avec des ondes (3.1) s'étendant parallèlement au plan des surfaces de paroi (2).

3. Appareil de réfrigération et/ou de congélation selon la revendication 1 ou 2, caractérisé en ce que les bords d'extrémité de la membrane (3) sont orientés vers les bords libres (6) des surfaces de paroi (2) et sont reliés à ces dernières d'une manière étanche au vide aux surfaces intérieures orientées les unes vers les autres.

4. Appareil de réfrigération et/ou de congélation selon la revendication 1 ou l'une des suivantes, caractérisé en ce que le recouvrement de membrane (7) passe sur les arêtes frontales associées (5) des surfaces de paroi (2).

5. Appareil de réfrigération et/ou de congélation selon la revendication 1 ou l'une des suivantes, caractérisé en ce que le recouvrement de membrane (7) passe entre les bords libres (5) des surfaces de paroi (2).

6. Appareil de réfrigération et/ou de congélation selon la revendication 5, caractérisé en ce que le recouvrement de membrane (7) se termine à une certaine distance de la membrane (3).

7. Appareil de réfrigération et/ou de congélation selon la revendication 5, caractérisé en ce que le recouvrement de membrane (7) est en affleurement avec la membrane (3).

8. Appareil de réfrigération et/ou de congélation selon la revendication 1 ou l'une des suivantes, caractérisé en ce que le recouvrement de membrane (7) est réalisé en un matériau isolant thermiquement, notamment en matière synthétique en mousse.

9. Appareil de réfrigération et/ou de congélation selon la revendication 1 ou l'une des suivantes, caractérisé en ce que le recouvrement de membrane (7) passe sur les zones de bord associées (6) des surfaces de paroi (2) à leur côté extérieur.

10. Appareil de réfrigération et/ou de congélation selon la revendication 1 ou l'une des suivantes, caractérisé en ce que le recouvrement de membrane (7) est retenu par une liaison par serrage aux surfaces de paroi (2).

11. Appareil de réfrigération et/ou de congélation selon la revendication 1 ou l'une des suivantes, caractérisé en ce que le recouvrement de membrane (7) est assemblé par collage avec au moins une surface de paroi intérieure (4).

12. Appareil de réfrigération et/ou de congélation selon la revendication 1 ou l'une des suivantes, caractérisé en ce que les zones de bord libres opposées (6) des surfaces de paroi (2) sont inclinées l'une vers l'autre et sont en application au recouvrement de membrane (7) avec des surfaces de retenue passant entre ces zones de bord (6).

13. Appareil de réfrigération et/ou de congélation selon la revendication 1 ou l'une des suivantes, caractérisé en ce que le recouvrement de membrane (7), dans un appareil de réfrigération ou de congélation, est pourvu d'un pôle opposé magnétique (9) qui est orienté vers une garniture d'étanchéité à une porte ou volet d'appareil pouvant être pivoté par rapport à celui-ci.

14. Appareil de réfrigération et/ou de congélation selon la revendication 13, caractérisé en ce que le pôle opposé (9) est réalisé sous forme de bande profilée et est ancré dans le recouvrement de membrane (7).

15. Appareil de réfrigération et/ou de congélation selon la revendication 13 ou 14, caractérisé en ce qu'une branche (9.1) du pôle opposé profilé (9) passe sur une zone de bord (5) d'une face de paroi (2).

16. Appareil de réfrigération et/ou de congélation selon la revendication 1 ou l'une des suivantes, caractérisé en ce qu'il est disposé dans l'espace entre les zones de bord extérieures (6) des surfaces de paroi (2) un élément chauffant (10).

17. Appareil de réfrigération et/ou de congélation selon la revendication 16, caractérisé en ce que l'élément chauffant (10) est disposé dans un canal (11) entre la membrane (3) et le recouvrement de membrane (7).

18. Appareil de réfrigération et/ou de congélation selon la revendication 16, caractérisé en ce que l'élément chauffant (10) est inséré dans le recouvrement de membrane (7).

19. Appareil de réfrigération et/ou de congélation selon la revendication 1 ou l'une des suivantes, caractérisé en ce que l'espace entre les zones de bord extérieures (10) des surfaces de paroi (2) est rempli de mousse en place.
